# EUROPEAN PATENT APPLICATION

(11) **EP 4 560 985 A1**
(43) Date of publication of application: **28.05.2025**
(21) Application number: 22952490.5
(22) Date of filing: 29.07.2022
(51) Int. Cl.: H04L 12/28

(54) **COMMUNICATION METHOD AND APPARATUS**

(71) Applicant: Huawei Technologies Co., Ltd., Shenzhen, Guangdong 518129 (CN)
(72) Inventor: ZHANG, Xudong, Shenzhen, Guangdong 518129 (CN); WANG, Yali, Shenzhen, Guangdong 518129 (CN); TANG, Weiping, Shenzhen, Guangdong 518129 (CN); WANG, Jian, Shenzhen, Guangdong 518129 (CN)
(74) Representative: Körber, Martin Hans
(86) International application number: PCT/CN2022/109042
(87) International publication number: WO 2024/021043

(57) **Abstract**

This application provides a communication method and apparatus. The method includes: A first node obtains logical channel information corresponding to a preset QoS parameter, where the logical channel information is used to establish a logical transmission channel between the first node and a second node, the second node is a neighboring node of the first node, and the logical transmission channel is used to provide QoS guarantee for a packet corresponding to the preset QoS parameter; the first node receives a first packet sent by the second node, where the first packet includes at least one of the following: an SLNA of the second node and an L2ID of an interface of the second node; and the first node performs communication at a network layer with the second node based on the logical channel information, the SLNA of the second node, and the L2ID of the interface of the second node. In embodiments of this application, QoS guarantee may be provided for the packet. Further, the method may be applied to an internet of vehicles, for example, vehicle-to-everything V2X, long term evolution-vehicle LTE-V, or vehicle-to-vehicle V2V.

## Description

### TECHNICAL FIELD

This application relates to the fields of internet of vehicles and communication technologies, and in particular, to a communication method and apparatus.

### BACKGROUND

In a conventional internet protocol (internet protocol, IP) network, a table of mapping between an IP address and a media access control (media access control, MAC) address is established between neighboring devices by using an address resolution protocol (address resolution protocol, ARP) learning mechanism or a static ARP configuration manner, to support single-hop forwarding of an IP packet between the neighboring devices. Specifically, a layer 2 packet header that includes a MAC address of a next-hop neighboring device may be encapsulated in an IP packet header, so that the encapsulated IP packet implements one-hop forwarding in a subnet between the neighboring devices. However, when the IP packet is forwarded based on an ARP entry, only a reachability problem of packet forwarding is resolved, but quality of service (quality of service, QoS) guarantee cannot be provided for the packet. Therefore, how to provide QoS guarantee for a packet becomes a technical problem that needs to be urgently resolved currently.

### SUMMARY

This application provides a communication method and apparatus, to provide QoS guarantee for a packet.

According to a first aspect, a communication method is provided, including: A first node obtains logical channel information corresponding to a preset quality of service (quality of service, QoS) parameter, where the logical channel information is used to establish a logical transmission channel between the first node and a second node, the second node is a neighboring node of the first node, and the logical transmission channel is used to provide QoS guarantee for a packet corresponding to the preset QoS parameter; the first node receives a first packet sent by the second node, where the first packet includes at least one of the following: a spark link network address (spark link network address, SLNA) of the second node, and a layer 2 identifier (layer 2 identification, L2ID) of an interface of the second node; and the first node performs communication at a network layer with the second node based on the logical channel information, the SLNA of the second node, and the L2ID of the interface of the second node.

It can be learned that the first node may obtain logical channel information corresponding to the preset QoS parameter, where the logical channel information is used to establish a logical transmission channel between the first node and a neighboring node of the first node, so that the first node may receive a first packet sent by the neighboring node, and may perform communication at the network layer with the neighboring node based on the logical channel information, an SLNA of the neighboring node, and a layer 2 identifier L2ID of an interface of the neighboring node. Because the logical transmission channel may be used to provide QoS guarantee for the packet corresponding to the preset QoS parameter, the first node may provide QoS guarantee for the packet when performing communication at the network layer with the neighboring node, and may further resolve a reachability problem of packet forwarding, and improve reliability of data transmission.

The QoS parameter may be a parameter predefined by the first node according to a service requirement, and therefore may also be referred to as the preset QoS parameter. It should be understood that in this application, different logical channel information may be used to establish different logical transmission channels, so as to transmit different services. That is, for different service requirements, the first node may establish different logical transmission channels by using different logical channel information, to transmit different services. Therefore, the QoS parameter corresponds to the logical channel information.

Optionally, the logical channel information includes at least one of the following: a transport channel identifier (transport channel identifier, TCID) and a logical channel identifier (logical channel identifier, LCID). The preset QoS parameter may correspond to the TCID. The TCID may be generated by the first node based on the QoS parameter, or may be predefined. This is not limited herein. Further, the TCID corresponds to the LCID, and the LCID may be generated by the first node based on the TCID, or may be predefined. This is not limited herein.

The first packet may be a Hello packet.

Optionally, the network layer may be configured to implement transmission of a data packet or a control packet between two nodes, and specific functions include addressing, route selection, connection establishment, maintenance, termination, and the like. Further, in this application, the network layer may be, for example, a spark link network layer.

The neighboring node is a name given by two directly connected nodes to each other. The directly connected node is a node that can establish a direct link, or may be understood as a node that can establish a neighboring relationship.

For example, an end node may establish a direct link with an intermediate node. Therefore, the intermediate node is a neighboring node of the end node, and the end node is a neighboring node of the intermediate node.

For another example, an intermediate node may establish a direct link with another intermediate node. Therefore, the intermediate node is a neighboring node of the another intermediate node, and the another intermediate node is a neighboring node of the intermediate node.

It should be understood that an L2ID of an interface of a node is a unique identifier that is allocated to the node and used as a network address for communication in a spark link network, and has a total of six bytes.

Optionally, with reference to the first aspect, that the first node performs communication at a network layer with the second node based on the logical channel information, the SLNA of the second node, and the L2ID of the interface of the second node includes: The first node establishes a forwarding table based on the logical channel information, the SLNA of the second node, and the L2ID of the interface of the second node; where the forwarding table includes at least one of the following: the logical channel information, the SLNA of the second node, and the L2ID of the interface of the second node, and the logical channel information, the SLNA of the second node, and the L2ID of the interface of the second node are in a one-to-one correspondence.

The forwarding table is used for direct transmission between the first node and the neighboring node.

It can be learned that the first node may establish the forwarding table based on the logical channel information, the SLNA of the neighboring node, and the L2ID of the interface of the neighboring node. Because the logical transmission channel may be used to provide QoS guarantee for the packet corresponding to the preset QoS parameter, when the first node implements communication at the network layer with the neighboring node by using the forwarding table, QoS guarantee can be provided for the packet, a reachability problem of packet forwarding can be further resolved, and reliability of data transmission can be improved.

Optionally, with reference to the first aspect, the forwarding table further includes a link quality level in a sending direction from the first node to the second node, and the link quality level indicates link quality in the sending direction from the first node to the second node.

The link quality level may be obtained by the second node through calculation based on one or more of a bit error, a delay, a signal-to-noise ratio, a transmit/receive rate, and the like.

It can be learned that the forwarding table further includes the link quality level in the sending direction from the first node to the second node, so that the first node can learn of the link quality level, and further can select a link with high link quality to transmit data. This improves reliability of data transmission.

Optionally, with reference to the first aspect, the link quality level is included in the first packet.

It can be learned that the first packet further includes the link quality level in the sending direction from the first node to the second node, so that the first node can learn of the link quality level, and further can select a link with high link quality to transmit data. This improves reliability of data transmission.

Optionally, with reference to the first aspect, the first packet further includes an area address of the second node, the second node is an intermediate node, and the area address of the second node indicates that an area in which the second node is located is a level-1 area and/or a level-2 area, where the level-2 area is used to connect the level-1 area.

For example, the level-1 area is a non-backbone area, and the level-2 area is a backbone area.

It can be learned that the area address of the second node may indicate that the area in which the second node is located is the level-1 area and/or the level-2 area. This avoids a case in which a plurality of pieces of information are required to jointly indicate that the area in which the second node is located is the level-1 area and/or the level-2 area, and reduces overheads.

Optionally, with reference to the first aspect, the area address of the second node belongs to an address range of the level-1 area, and the area address of the second node indicates that the area in which the second node is located is the level-1 area; the area address of the second node belongs to an address range of the level-2 area, and the area address of the second node indicates that the area in which the second node is located is the level-2 area; or the area address of the second node belongs to an address range of the level-1 area and the level-2 area, and the area address of the second node indicates that the area in which the second node is located is an overlapping area of the level-1 area and the level-2 area.

The address range of the level-1 area may be 1 to 30000, and the address range of the level-2 area may be 30001 to 60000. Alternatively, the address range of the level-1 area may be 30001 to 60000, and the address range of the level-2 area may be 1 to 30000.

For example, the area address of the second node is 2, and the address range of the level-1 area is 1 to 30000. Therefore, 2 belongs to the address range of the level-1 area, and it may be learned that the area in which the second node is located is the level-1 area.

For another example, the area address of the second node is 32561, and the address range of the level-2 area is 30001 to 60000. Therefore, the 32561 belongs to the address range of the level-2 area, and it may be learned that the area in which the second node is located is the level-2 area.

For another example, area addresses of the second node are 2 and 32561, respectively. The address range of the level-1 area is 1 to 30000, the address range of the level-2 area is 30001 to 60000, 2 belongs to the address range of the level-1 area, and 32561 belongs to the address range of the level-2 area. Therefore, the second node is in both the first area and the second area, that is, the area in which the second node is located is an overlapping area of the level-1 area and the level-2 area.

It can be learned that the area address of the second node may indicate that the area in which the second node is located is the level-1 area and/or the level-2 area. This avoids a case in which a plurality of pieces of information are required to jointly indicate that the area in which the second node is located is the level-1 area and/or the level-2 area, and reduces overheads.

Optionally, with reference to the first aspect, the first packet further indicates a type of the second node.

It can be learned that because the first packet may further indicate the type of the second node, the first node may learn of the type of the second node, so that the end node may discard the Hello packet sent by the end node.

Optionally, with reference to the first aspect, the first packet includes a first type length value TLV field, and the first TLV field includes at least one of the following: the SLNA of the second node and the L2ID of the interface of the second node.

There may be one or more SLNAs of the second node. In a possible implementation, one or more SLNAs of the second node correspond to an L2ID of one interface of the second node.

It can be learned that the first TLV field includes at least one of the following: the SLNA of the second node and the L2ID of the interface of the second node, so that the first node may perform communication at the network layer with the second node based on the logical channel information, the SLNA of the second node, and the L2ID of the interface of the second node.

Optionally, with reference to the first aspect, the first packet further includes a second TLV field, and the second TLV field includes the link quality level.

It can be learned that the first packet further includes a second TLV field, and the second TLV field includes the link quality level, so that the first node can learn of the link quality level, and further can select a link with high link quality to transmit data. This improves reliability of data transmission.

Optionally, with reference to the first aspect, the first packet further includes a third TLV field, and the third TLV field includes one length field and at least one area address field corresponding to the length field; and the length field indicates a total length of the at least one area address field, and one area address field indicates one area address of the second node.

For example, two area addresses are configured for the second node, which are 1 and 30001, respectively. The third TLV field includes one length field and two area address fields corresponding to the length field. A length of an area address field is 2 bytes. Therefore, a total length of the two area address fields is 4 bytes, that is, a length of the length field is 4 bytes. In addition, area addresses indicated by the two area address fields are 1 and 30001, respectively.

It can be learned that the third TLV field includes one length field and at least one area address field corresponding to the length field, and the length field indicates a total length of the at least one area address field. This avoids a need to configure a plurality of length fields to respectively indicate lengths of corresponding area address fields, and reduces overheads.

Optionally, with reference to the first aspect, the first packet further includes a fourth TLV field, and the fourth TLV field indicates an authentication algorithm used by the second node, or the fourth TLV field indicates an authentication algorithm and an authentication key that are used by the second node.

The authentication algorithm may include, for example, a hash-based message authentication code (hash-based message authentication code, HMAC) secure hash algorithm 256 (secure hash algorithm 256, SHA-256), an HMAC-MD5, an HMAC-SHA1-12, or an HMAC-SHA1-20. The authentication key may be considered as an encrypted character string.

It can be learned that the first packet includes a fourth TLV field, and the fourth TLV field indicates the authentication algorithm used by the second node, or the fourth TLV field indicates the authentication algorithm and the authentication key that are used by the second node. This avoids needing different authentication TLV fields to respectively indicate a non-keychain class and a keychain class, and reduces overheads.

Optionally, the first node is an end node, and the second node is the intermediate node. The method further includes: The first node adds default route information to a routing table of the first node, where the default route information includes at least one of the following: a default destination address, an outbound interface of the first node, an L2ID of an interface of a next-hop node, and the logical channel information, where the next-hop node is the second node.

Optionally, that the default destination address, the outbound interface of the first node, the L2ID of the interface of the next-hop node, and the logical channel information are in a one-to-one correspondence may also be understood as: The default route information includes the one-to-one correspondence between the default destination address, the outbound interface of the first node, the L2ID of the interface of the next-hop node, and the logical channel information.

The default destination address may be, for example, 0.0. The outbound interface of the first node may be understood as an interface that is in the first node and that is connected to the second node. The next-hop node is the second node.

It can be learned that, because the first node adds the default route information to the routing table of the first node, when forwarding a packet, if no corresponding route is found in the routing table of the first node, the first node may send the packet to the default destination address, so that the first node can maintain fewer routes. In this way, memory is saved, more energy is saved, and the first node is more conducive to moving between different intermediate nodes. In addition, a problem of packet loss is avoided, and reliability of data transmission is improved.

According to a second aspect, a communication apparatus is provided. The communication apparatus is a first node, and the communication apparatus includes a transceiver unit. The transceiver unit is configured to: obtain logical channel information corresponding to a preset quality of service QoS parameter, where the logical channel information is used to establish a logical transmission channel between the first node and a second node, the second node is a neighboring node of the first node, and the logical transmission channel is used to provide QoS guarantee for a packet corresponding to the preset QoS parameter; receive a first packet sent by the second node, where the first packet comprises at least one of the following: a spark link network address SLNA of the second node, and a layer 2 identifier L2ID of an interface of the second node; and perform communication at a network layer with the second node based on the logical channel information, the SLNA of the second node, and the L2ID of the interface of the second node.

Optionally, with reference to the second aspect, the logical channel information includes at least one of the following: a transport channel identifier TCID and a logical channel identifier LCID.

Optionally, with reference to the second aspect, that the transceiver unit is configured to perform communication at a network layer with the second node based on the logical channel information, the SLNA of the second node, and the L2ID of the interface of the second node includes: the transceiver unit is configured to establish a forwarding table based on the logical channel information, the SLNA of the second node, and the L2ID of the interface of the second node, where the forwarding table includes at least one of the following: the logical channel information, the SLNA of the second node, and the L2ID of the interface of the second node, and the logical channel information, the SLNA of the second node, and the L2ID of the interface of the second node are in a one-to-one correspondence.

Optionally, with reference to the second aspect, the forwarding table further includes a link quality level in a sending direction from the first node to the second node, and the link quality level indicates link quality in the sending direction from the first node to the second node.

Optionally, with reference to the second aspect, the link quality level is included in the first packet.

Optionally, with reference to the second aspect, the first packet further includes an area address of the second node, the second node is an intermediate node, and the area address of the second node indicates that an area in which the second node is located is a level-1 area and/or a level-2 area, where the level-2 area is used to connect the level-1 area.

Optionally, with reference to the second aspect, the level-1 area is a non-backbone area, and the level-2 area is a backbone area.

Optionally, with reference to the second aspect, the area address of the second node belongs to an address range of the level-1 area, and the area address of the second node indicates that the area in which the second node is located is the level-1 area; the area address of the second node belongs to an address range of the level-2 area, and the area address of the second node indicates that the area in which the second node is located is the level-2 area; or the area address of the second node belongs to an address range of the level-1 area and the level-2 area, and the area address of the second node indicates that the area in which the second node is located is an overlapping area of the level-1 area and the level-2 area.

Optionally, with reference to the second aspect, the first packet further indicates a type of the second node.

Optionally, with reference to the second aspect, the first packet includes a first type length value TLV field, and the first TLV field includes at least one of the following: the SLNA of the second node and the L2ID of the interface of the second node.

Optionally, with reference to the second aspect, one or more SLNAs of the second node correspond to an L2ID of one interface of the second node.

Optionally, with reference to the second aspect, the first packet further includes a second TLV field, and the second TLV field includes the link quality level.

Optionally, with reference to the second aspect, the first packet further includes a third TLV field, the third TLV field includes one length field and at least one area address field corresponding to the length field, and the length field indicates a total length of the at least one area address field, and one area address field indicates one area address of the second node.

Optionally, with reference to the second aspect, the first packet further includes a fourth TLV field, and the fourth TLV field indicates an authentication algorithm used by the second node, or the fourth TLV field indicates an authentication algorithm and an authentication key that are used by the second node.

Optionally, with reference to the second aspect, the first node is an end node, the second node is the intermediate node, and the communication apparatus further includes a processing unit. The processing unit is configured to add default route information to a routing table of the first node, where the default route information includes at least one of the following: a default destination address, an outbound interface of the first node, an L2ID of an interface of a next-hop node, and the logical channel information, where the next-hop node is the second node.

According to a third aspect, a communication apparatus is provided, including a processor and a memory, where the memory is configured to store one or more programs, the one or more programs include computer-execution instructions, and when the apparatus is operating, the processor executes the one or more programs stored in the memory, to enable the apparatus to perform the method according to any one of the first aspect.

According to a fourth aspect, a computer storage medium is provided, where the computer storage medium stores a computer program, and when the computer program is run on a computer, the computer is enabled to perform the method according to any implementation of the first aspect.

According to a fifth aspect, a chip is provided. The chip includes a processor and a communication interface. The processor is configured to invoke instructions from the communication interface and run the instructions. When executing the instructions, the processor implements the method according to any implementation of the first aspect.

According to a sixth aspect, a computer program product is provided. The computer program product includes a computer program, and when the computer program is run on a computer, the computer is enabled to perform the method according to any implementation of the first aspect.

According to a seventh aspect, a communication system is provided, including the foregoing first node and/or the foregoing second node.

### BRIEF DESCRIPTION OF DRAWINGS

The following briefly describes accompanying drawings used in descriptions of embodiments or a conventional technology.
FIG. 1 is a diagram of performing a connection through an interface according to an embodiment of this application;
FIG. 2 is a diagram of area division of a wireless network according to an embodiment of this application;
FIG. 3 is a diagram of a system architecture according to an embodiment of this application;
FIG. 4 is a schematic flowchart of a communication method according to an embodiment of this application;
FIG. 5 is a diagram of building a forwarding table according to an embodiment of this application;
FIG. 6 is a diagram of a structure of a communication apparatus 60 according to an embodiment of this application; and
FIG. 7 is a diagram of a structure of a communication apparatus 70 according to an embodiment of this application.

### DESCRIPTION OF EMBODIMENTS

The following describes the technical solutions in embodiments of this application with reference to the accompanying drawings in embodiments of this application. The terms "system" and "network" may be used interchangeably in embodiments of this application. "/" represents an "or" relationship between associated objects unless otherwise specified. For example, A/B may represent A or B. The term "and/or" in this application is merely an association relationship for describing associated objects, and represents that three relationships may exist. For example, A and/or B may represent the following three cases: Only A exists, both A and B exist, and only B exists, where A and B each may be singular or plural. In addition, in the descriptions of this application, "a plurality of" means two or more than two unless otherwise specified. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as first and second are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

Reference to "an embodiment", "some embodiments", or the like described in the embodiments of this application means that one or more embodiments of this application include a specific feature, structure, or characteristic described with reference to the embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner. In the following specific implementations, objectives, technical solutions, and beneficial effects of this application are further described in detail. It should be understood that the following descriptions are merely specific implementations of this application, but are not intended to limit the protection scope of this application. Any modification, equivalent replacement, improvement, or the like made based on the technical solutions of this application shall fall within the protection scope of this application.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

The following describes some terms involved in this application.

### 1. Node (node)

In this application, the node is an electronic device with a communication capability, and is also referred to as a communication node. Nodes can be classified into an end node and an intermediate node.

The end node may be referred to as a wireless end system (wireless end system, WES). For the WES, refer to a definition of an end system (end system) in (international telecommunication union-telecommunication sector, ITU-T) Rec. X.200 I ISO/IEC 7498-1. It should be understood that in this application, the end node is movable. For example, the end node may be migrated from one intermediate node to another intermediate node. It may also be understood that the end node may access one intermediate node at a moment, and access another intermediate node at another moment. In addition, the end node does not have a routing function, or may not have a constant power supply. That is, the end node does not have a continuous power supply and needs to be powered by batteries, or is powered by solar energy, wind energy, heat energy, and a capacitor.

The intermediate node may be referred to as a wireless intermediate system (wireless intermediate system, WIS). For the WIS, refer to a definition of an intermediate system (intermediate system) in the international organization for standardization (international organization for standardization, ISO). It should be understood that in this application, the intermediate node generally does not move frequently. In addition, the intermediate node has routing and forwarding functions.

It should be understood that in this application, the end node and the intermediate node may be connected through an interface (interface), to form a logical link (link for short), or the intermediate nodes may be connected through an interface (interface), to form a logical link. The interface in this embodiment of this application may be referred to as an air interface, or may use another name. This is not limited herein. The interface may be implemented by using a short-range connection technology, such as Bluetooth (Bluetooth), zigbee (zigbee), wireless fidelity (wireless fidelity, Wi-Fi), and a vehicle-mounted short-range wireless communication technology. In addition, the interface in this embodiment of this application may alternatively be implemented by using a long-distance connection technology, for example, a long term evolution (long term evolution, LTE), a fifth generation mobile communication technology (5th generation mobile networks or 5th generation wireless systems, 5th-Generation, 5G or 5G technology for short), or a vehicle-mounted wireless communication technology.

A node may include one or more interfaces. For example, an end node may include one or more interfaces, and an intermediate node may also include one or more interfaces. Different interfaces of a node may be implemented by using different technologies, that is, types of a plurality of interfaces of a node may be different. For example, one end node includes three interfaces, which are respectively implemented by using Bluetooth, zigbee, and wireless fidelity. It should be understood that different interface identifiers may be used to distinguish interface types. In a possible implementation, interfaces of a same type of different nodes may use a same interface identifier or different interface identifiers. This is not limited herein.

Generally, interfaces of different types cannot communicate with each other at a bottom layer because of a difference between a physical layer and a link layer. Therefore, different nodes need to be connected by using interfaces of the same type to form a link, and then data can be transmitted on the link.

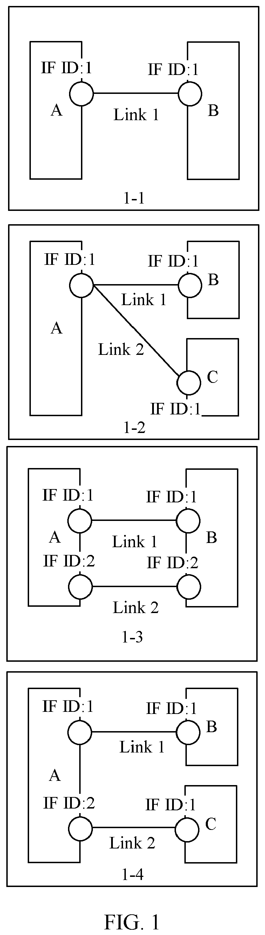

For example, FIG. 1 is a diagram of performing a connection through an interface according to an embodiment of this application. In FIG. 1, A, B, and C respectively represent an intermediate node, and IF ID is an interface identifier of the intermediate node. In 1-1 in FIG. 1, an interface whose interface identifier is 1 in A is connected to an interface whose interface identifier is 1 in B, to form a link 1. That is, a type of the interface whose interface identifier is 1 in A is the same as that of the interface whose interface identifier is 1 in B. In 1-2 in FIG. 1, the interface whose interface identifier is 1 in A is connected to the interface whose interface identifier is 1 in B, to form the link 1, and the interface whose interface identifier is 1 in A is connected to an interface whose interface identifier is 1 in C, to form a link 2. That is, the type of the interface whose interface identifier is 1 in A is the same as that of the interface whose interface identifier is 1 in B, and the type of the interface whose interface identifier is 1 in A is the same as that of the interface whose interface identifier is 1 in C. In 1-3 in FIG. 1, the interface whose interface identifier is 1 in A is connected to the interface whose interface identifier is 1 in B, to form the link 1, and an interface whose interface identifier is 2 in A is connected to an interface whose interface identifier is 2 in B, to form a link 2. That is, the type of the interface whose interface identifier is 1 in A is the same as that of the interface whose interface identifier is 1 in B, and the type of the interface whose interface identifier is 2 in A is the same as that of the interface whose interface identifier is 2 in B. In 1-4 in FIG. 1, the interface whose interface identifier is 1 in A is connected to the interface whose interface identifier is 1 in B, to form the link 1, and the interface whose interface identifier is 2 in A is connected to the interface whose interface identifier is 1 in C, to form a link 2. That is, the type of the interface whose interface identifier is 1 in A is the same as that of the interface whose interface identifier is 1 in B, and the type of the interface whose interface identifier is 2 in A is the same as that of the interface whose interface identifier is 1 in C. In addition, with reference to 1-1 and 1-2 in FIG. 1, it can be learned that one interface of a same node may be connected to one or more interfaces of a same type of another node. With reference to 1-3 and 1-4 in FIG. 1, it can be learned that a plurality of interfaces of a same node may be respectively connected to interfaces of a same type of a plurality of nodes.

Scalability of a large-scale network is considered. In this embodiment of this application, a wireless network may be divided and conquered. That is, the wireless network may be divided into one or more level-1 areas (level-1 areas) and one level-2 area (level-2 area). The level-1 area may be a non-backbone area, and the level-2 area may be a backbone area.

It should be noted that, in this application, the level-1 area may include one or more of an end node, an intermediate node, and the like, and the level-2 area may include an intermediate node. A quantity of nodes in any area is not limited.

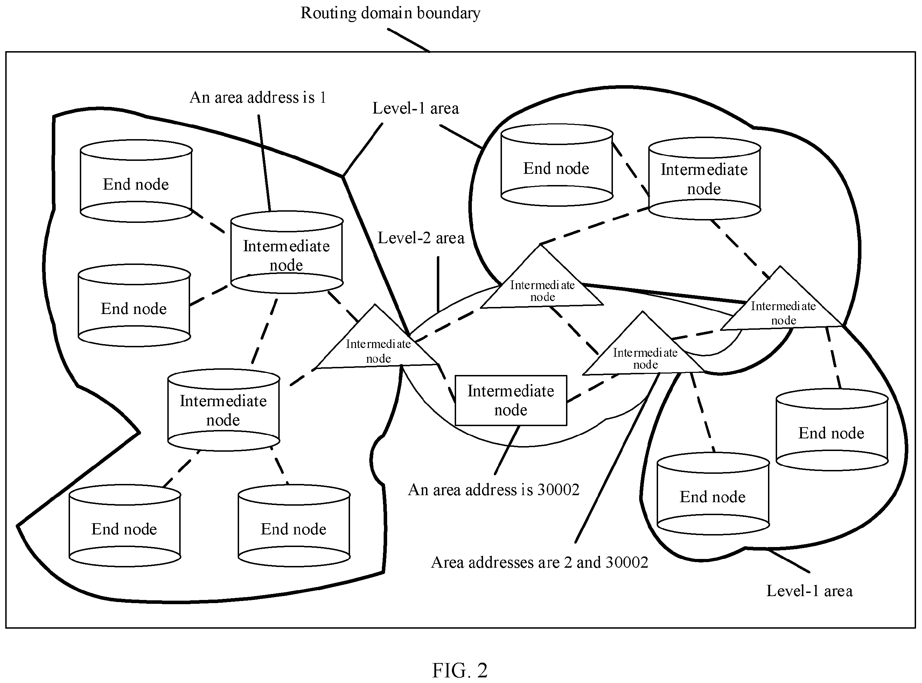

For example, FIG. 2 is a diagram of area division of a wireless network according to an embodiment of this application. In FIG. 2, there are three level-1 areas and one level-2 area. The end node can be located in any level-1 area, but the level-2 area does not include the end node.

It should be understood that in this application, the level-2 area may be configured to connect one or more level-1 areas, so that data between different level-1 areas can be exchanged.

To implement a function, for example, uniquely identifying an entity in a wireless network, a network entity title (network entity title, NET) may be defined. Refer to Table 1. Table 1 shows a NET format according to an embodiment of this application. It can be learned that one NET may include an area address (area address) of 2 bytes (bytes) and a system identifier (system ID) of 6 bytes. One byte is eight bits (bits).

**Table 1**

| Network entity identifier | |
|---|---|
| Area address | System identifier |

In this application, the area address may be referred to as an area identifier (area ID), or may use another name. This is not limited herein. An area address of a node may indicate that an area in which the node is located is a level-1 area and/or a level-2 area. This avoids a case in which a plurality of pieces of information are required to jointly indicate that the area in which the node is located is the level-1 area and/or the level-2 area, and reduces overheads.

There are four types of area addresses: 0, 1 to 30000, 30001 to 60000, and 60001 to 65535. 0 and 60001 to 65535 are reserved area addresses. 1 to 30000 is an address range of the level-1 area, and 30001 to 60000 is an address range of the level-2 area. Alternatively, 1 to 30000 is the address range of the level-2 area, and 30001 to 60000 is the address range of the level-1 area. In this way, it can be determined, by using the area address, that an area in which a specific node is located is the level-1 area and/or the level-2 area. This avoids a case in which a plurality of pieces of information are required to jointly indicate that the area in which the specific node is located is the level-1 area and/or the level-2 area, and reduces overheads.

The end node is not configured with an area address, but only a system identifier. In this case, the area address is 0 in the NET of the end node. The system identifier of the end node uniquely identifies the end node.

An intermediate node may be configured with one or more area addresses. It should be understood that, when an area in which an intermediate node is located is an overlapping area of the level-1 area and the level-2 area, a plurality of area addresses may be configured for the intermediate node. In a possible implementation, one intermediate node may be configured with a maximum of three area addresses. Optionally, area addresses of different intermediate nodes may be all the same, partially the same, or completely different. For example, an area address of one intermediate node may be 1, and an area address of another intermediate node may also be 1, that is, area addresses of the two intermediate nodes are the same. For another example, an area address of one intermediate node may include 1 and 30001, and an area address of another intermediate node may be 1, that is, area addresses of the two intermediate nodes are partially the same. For another example, an area address of one intermediate node may be 1, and an area address of another intermediate node may be 30001, that is, area addresses of the two intermediate nodes are completely different.

The intermediate node may also be configured with a system identifier. The system identifier of the intermediate node is used to uniquely identify the intermediate node.

For example, an NET of the intermediate node is 0001.1234.5678.0123 (hexadecimal), where the area address of the intermediate node is 0001, and the system identifier of the intermediate node is 1234.5678.0123.

To reduce configuration and configuration errors, in this application, a layer 2 identifier (layer 2 identification, L2ID) of an interface of the end node may be reused for the system identifier of the end node. Certainly, an L2ID of an interface of the intermediate node may also be reused for the system identifier of the intermediate node. Optionally, in this application, a largest or smallest L2ID of a plurality of interfaces of the node may be reused for a system identifier of one node.

It should be understood that an L2ID of an interface of a node is a unique identifier that is allocated to the node and used as a network address for communication in a spark link network, and has a total of six bytes.

### 2. Neighboring node

The neighboring node is a name given by two directly connected nodes to each other. The directly connected node is a node that can establish a direct link, or may be understood as a node that can establish a neighboring relationship.

For example, an end node may establish a direct link with an intermediate node. Therefore, the intermediate node is a neighboring node of the end node, and the end node is a neighboring node of the intermediate node.

For another example, an intermediate node may establish a direct link with another intermediate node. Therefore, the intermediate node is a neighboring node of the another intermediate node, and the another intermediate node is a neighboring node of the intermediate node.

In this application, the end node has no area address, a neighboring node of the end node is an intermediate node, the end node may be connected to the intermediate node, and an area address of the intermediate node belongs to the address range of the level-1 area; or an area address of the intermediate node belongs to the address range of the level-1 area and the level-2 area. Therefore, a neighboring type of the end node and the intermediate node may be referred to as a first neighboring type.

In this application, a neighboring type of an intermediate node and a neighboring node (the neighboring node is another intermediate node) may be one of the following: a first neighboring type, a second neighboring type, or a third neighboring type. Details are as follows.

When the area address belonging to the address range of the level-1 area in the intermediate node has an intersection set with the area address belonging to the address range of the level-1 area in the neighboring node, but the area address belonging to the address range of the level-2 area in the intermediate node has no intersection set with an area address belonging to the address range of the level-2 area in the neighboring node, the neighboring type of the intermediate node and the neighboring node is the first neighboring type.

When the area address belonging to the address range of the level-1 area in the intermediate node has no intersection set with the area address belonging to the address range of the level-1 area in the neighboring node, but the area address belonging to the address range of the level-2 area in the intermediate node has an intersection set with the area address belonging to the address range of the level-2 area in the neighboring node, the neighboring type of the intermediate node and the neighboring node is the second neighboring type.

When the area address belonging to the address range of the level-1 area in the intermediate node has an intersection set with the area address belonging to the address range of the level-1 area in the neighboring node, and the area address belonging to the address range of the level-2 area in the intermediate node has an intersection set with the area address belonging to the address range of the level-2 area in the neighboring node, the neighboring type of the intermediate node and the neighboring node is the third neighboring type.

For example, an area address of an intermediate node #A is 1, area addresses of an intermediate node #B are 1 and 30002, an address range of the level-1 area is 1 to 30000, and an address range of the level-2 area is 30001 to 60000. An intersection set of the area addresses of the intermediate node #A and the intermediate node #B is 1, and 30002 is not the intersection set of the area addresses of the intermediate node #A and the intermediate node #B. 1 belongs to the address range of the level-1 area, and 30002 belongs to the address range of the level-2 area. Therefore, a neighboring type of the intermediate node #A and the intermediate node #B is the first neighboring type.

For another example, an area address of an intermediate node #C is 30002, area addresses of the intermediate node #D are 1 and 30002, an address range of the level-1 area is 1 to 30000, and an address range of the level-2 area is 30001 to 60000. An intersection set of the area addresses of the intermediate node #C and the intermediate node #D is 30002, 1 is not the intersection set of the area addresses of the intermediate node #A and the intermediate node #B, 1 belongs to the address range of the level-1 area, and 30002 belongs to the address range of the level-2 area. Therefore, a neighboring type of the intermediate node #C and the intermediate node #D is the second neighboring type.

For another example, area addresses of the intermediate node #E are 1 and 30002, area addresses of the intermediate node #F are 1 and 30002, an address range of the level-1 area is 1 to 30000, and an address range of the level-2 area is 30001 to 60000. An intersection set of the area addresses of the intermediate node #E and the intermediate node #F is 1 and 30002, 1 belongs to the address range of the level-1 area, and 30002 belongs to the address range of the level-2 area. Therefore, a neighboring type of the intermediate node #E and the intermediate node #F is the third neighboring type.

### 3. Quality of service (quality of service, QoS) parameter

In this application, the QoS parameter is a parameter predefined by the end node or the intermediate node based on a service requirement, and therefore may also be referred to as a preset QoS parameter.

For example, the QoS parameter may include one or more of a default priority value, a delay, a packet loss rate, a burst data volume size, an average window, and the like.

The QoS parameter corresponds to a TCID. The TCID may be generated by the end node or the intermediate node based on the QoS parameter, or may be predefined. This is not limited herein. Further, the TCID corresponds to the LCID, and the LCID may be generated by the end node or the intermediate node based on the TCID, or may be predefined. This is not limited herein.

Optionally, one or more of the TCID and the LCID may be used to establish a logical transmission channel between the end node or the intermediate node and the neighboring node. The logical transmission channel may be configured to provide QoS guarantee for a packet corresponding to the QoS parameter.

### 4. Hello packet

In this application, one end node or one intermediate node may establish a neighboring relationship with one or more neighboring nodes by using a Hello packet, to exchange one or more of a spark link network address (spark link network address, SLNA), a layer 2 identifier of an interface, and the like. In this way, communication may be performed at a network layer with the neighboring node. It may be understood that a neighboring relationship cannot be established between different end nodes, that is, the end nodes do not receive a Hello packet from each other.

The network layer may be configured to implement transmission of a data packet or a control packet between two nodes, and specific functions include addressing, route selection, connection establishment, maintenance, termination, and the like. Further, in this application, the network layer may be, for example, a spark link network layer.

The Hello packet may include a packet header (header) and one or more type length values (type length values, TLV). The packet header may be referred to as a Hello protocol data unit (protocol data unit, PDU) header, or may use another name. This is not limited herein.

The following describes a format of the Hello packet with reference to the following table.

Refer to Table 2. Table 2 is a format of a packet header of a Hello packet according to an embodiment of this application. As shown in Table 2, meanings and lengths of fields in the packet header are as follows.

Network layer protocol identifier (network layer protocol identifier): Routing protocol constant, used to identify a Hello packet, with a value to be determined (to be done, TBD). A length of this field is 1 byte.

Version (version): 1. A length of this field is 1 byte.

PDU type (type): Type of the Hello packet. It should be understood that a Hello packet generated by the end node is a WEH packet for short, and a Hello packet generated by the intermediate node is a WIH packet for short. Therefore, this field can be used to determine a type of a node that generates the Hello packet. A length of this field is 1 byte. It should be understood that, by using this field, the node that receives the Hello packet may learn of the type of the node that sends the Hello packet, so that the end node may discard the Hello packet sent by the end node.

Source system identifier (source system ID): System identifier of the node that sends the Hello packet. A length of this field is 6 bytes.

Source interface identifier (source interface ID): Identifier of an interface on which the node that sends the Hello packet. A length of this field is 1 byte.

Holding time (holding time): If no Hello packet is received from a neighboring node within the holding time, the neighboring relationship is terminated. The unit can be second. A length of this field is 2 bytes.

PDU length (length): Length of the Hello packet. The unit can be byte. A length of this field is 2 bytes.

Checksum (checksum): Checksum of the Hello packet, used to verify integrity of the Hello packet. A length of this field is 2 bytes.

Sequence number (sequence number): Used to prevent a replay attack. The replay attack means that an attacker sends a data packet that has been received by a node to spoof a system. The replay attack is mainly used in an identity authentication process and destroys correctness of authentication. A length of this field is 4 bytes.

Variable length field (variable length fields): Can be used to carry a newly added TLV field. A length of the variable length field is variable.

**Table 2**

| | |
|---|---|
| Network layer protocol identifier (network layer protocol identifier) | Routing protocol constant, used to identify a Hello packet, with a value to be determined (to be done, TBD). A length of this field is 1 byte. |
| Version (version) | The version is 1. A length of this field is 1 byte. |
| PDU type (type) | Type of the Hello packet. It should be understood that a Hello packet generated by the end node is a WEH packet for short, and a Hello packet generated by the intermediate node is a WIH packet for short. Therefore, this field can be used to determine a type of a node that generates the Hello packet. A length of this field is 1 byte. |
| Source system identifier (source system ID) | System identifier of a node that sends the Hello packet. A length of this field is 6 bytes. |
| Source interface identifier (source interface ID) | Identifier of an interface on which the node that sends the Hello packet. A length of this field is 1 byte. |
| Holding time (holding time) | If no Hello packet is received from a neighboring node within the time, an established neighboring relationship is terminated. The unit can be second. A length of this field is 2 bytes. |
| PDU length (length) | Length of the Hello packet. The unit can be byte. A length of this field is 2 bytes. |
| Checksum (checksum) | Checksum of the Hello packet, used to verify integrity of the Hello packet. A length of this field is 2 bytes. |
| Sequence number (sequence number) | Used to prevent a replay attack. The replay attack means that an attacker sends a data packet that has been received by a node to spoof a system. The replay attack is mainly used in an identity authentication process and destroys correctness of authentication. A length of this field is 4 bytes. |
| Variable length field (variable length field) | Can be used to carry a newly added TLV field. A length of the variable length field is variable. |

Refer to Table 3. Table 3 is a format of a TLV field of a Hello packet according to an embodiment of this application. As shown in Table 3, meanings and lengths of fields in the TLV field are as follows.

Type (type): Used for a type of the TLV field, with a value TBD. A length of the type field is 1 byte.

Length (length): Total length of an area address field. A quantity of this field is 1. A length of an area address field is two bytes. One intermediate node may be configured with one or more area addresses. Therefore, a length of a length field is variable. Optionally, one intermediate node may be configured with a maximum of three area addresses. Therefore, a length of the length field may be 2 bytes, 4 bytes, or 6 bytes. For example, when the TLV field includes an area address field, a length of the length field may be 2 bytes. When the TLV field includes two area address fields, a length of the length field may be 4 bytes. When the TLV field includes three area address fields, a length of the length field may be 6 bytes. This avoids needing to configure a plurality of length fields to respectively indicate lengths of corresponding area address fields, and reduces overheads.

Area address (area address): There may be one or more fields. Optionally, if one intermediate node can be configured with a maximum of three area addresses, there may be a maximum of three fields.

**Table 3**

| | |
|---|---|
| Type (type) | Used for a type of this TLV field, with a value TBD. A length of the type field is 1 byte. |
| Length (length) | Total length of an area address field. A quantity of this field is 1. A length of an area address field is two bytes. One intermediate node may be configured with one or more area addresses. Therefore, a length of a length field is variable. |
| | Optionally, one intermediate node may be configured with a maximum of three area addresses. Therefore, a length of the length field may be 2 bytes, 4 bytes, or 6 bytes. For example, when the TLV field includes an area address field, a length of the length field may be 2 bytes. When the TLV field includes two area address fields, a length of the length field may be 4 bytes. When the TLV field includes three area address fields, a length of the length field may be 6 bytes. |
| Area address (area address) | A quantity of this field may be one or more. Optionally, if one intermediate node can be configured with a maximum of three area addresses, there may be a maximum of three fields. |

In this application, the TLV field shown in Table 3 may be referred to as an area address TLV field, or may use another name. This is not limited herein.

It should be understood that the Hello packet may include one area address TLV field. In addition, the Hello packet sent by the intermediate node includes only one area address TLV field. The Hello packet sent by the end node cannot include the area address TLV field. The intermediate node receives a Hello packet from the intermediate node, and discards the Hello packet if the Hello packet does not have the area address TLV field or has a plurality of area address TLV fields. The intermediate node receives a Hello packet from the end node, and discards the Hello packet if the Hello packet includes the area address TLV field. The end node receives a Hello packet from the intermediate node, and discards the Hello packet if the Hello packet does not include the area address TLV field or includes a plurality of area address TLV fields.

Refer to Table 4. Table 4 is a format of another TLV field of the Hello packet according to an embodiment of this application. As shown in Table 4, meanings and lengths of fields in the TLV field are as follows.

Type: Used for a type of the TLV field, with a value TBD. A length of the type field is 1 byte.

Length: Length of the TLV field. The length of the TLV field may be 6 to 254 bytes, that is, the length of the TLV field is variable. A length of the length field may be 1 byte.

Authentication type (authentication type): A value 0 of this field is reserved. The value of this field ranges from 1 to 200, and the field indicates a non-keychain class, that is, the field indicates an authentication algorithm (authentication algorithm). The authentication algorithm may include, for example, a hash-based message authentication code (hash-based message authentication code, HMAC) secure hash algorithm 256 (secure hash algorithm 256, SHA-256), an HMAC-MD5, an HMAC-SHA1-12, or an HMAC-SHA1-20. A value of this field ranges from 201 to 60000, and the field indicates a keychain class, that is, the field indicates an authentication algorithm and an authentication key (authentication key). Optionally, an identifier of a security association (security association, SA) may indicate the authentication algorithm and the authentication key. The authentication key may be understood as an encrypted character string. A value ranging from 60001 to 65535 of this field is reserved. This avoids needing different authentication TLV fields to respectively indicate the non-keychain class and the keychain class, and reduces overheads.

Authentication value (authentication value): Used for indicating brief information of authentication. The brief information of authentication may be information obtained by calculating the Hello packet and the authentication key by the node that sends the Hello packet by using the authentication algorithm. A length of this field is variable.

**Table 4**

| | |
|---|---|
| Type | Used for a type of this TLV field, with a value TBD. A length of the type field is 1 byte. |
| Length | A length of the TLV field. The length of the TLV field may be 6 to 254 bytes, that is, a length of the TLV field is variable. A length of a length field may be 1 byte. |
| Authentication type (authentication type) | A value 0 of this field is reserved. The value of this field ranges from 1 to 200, and the field indicates a non-keychain class, that is, the field indicates an authentication algorithm (authentication algorithm). The authentication algorithm may include, for example, a hash-based message authentication code (hash-based message authentication code, HMAC) secure hash algorithm 256 (secure hash algorithm 256, SHA-256), an HMAC-MD5, an HMAC-SHA1-12, or an HMAC-SHA1-20. A value of this field ranges from 201 to 60000, and the field indicates a keychain class, that is, the field indicates an authentication algorithm and an authentication key (authentication key). Optionally, an identifier of a security association (security association, SA) may indicate the authentication algorithm and the authentication key. The authentication key may be understood as an encrypted character string. A value ranging from 60001 to 65535 of this field is reserved. |
| Authentication value (authentication value) | Used for indicating brief information of authentication. The brief information of authentication may be information obtained by calculating the Hello packet and the authentication key by the node that sends the Hello packet by using the authentication algorithm. A length of this field is variable. |

In this application, the TLV field shown in Table 4 may be referred to as an authentication TLV field, or may use another name. This is not limited herein.

It should be understood that the Hello packet may include one authentication TLV field. If no authentication algorithm is configured or no authentication algorithm and authentication key are configured, the Hello packet does not carry the authentication TLV field. The Hello packet sent by the node includes at most one authentication TLV field. When the Hello packet received by the node includes a plurality of authentication TLV fields, the Hello packet is discarded.

In addition, a relationship between the authentication TLV field and the checksum field in Table 1 is as follows: when encoding the Hello packet, the node first sets a value of the checksum field to zero, then calculates the brief information of authentication, and finally calculates the value of the checksum field after encoding the authentication TLV field; or when decoding the Hello packet, the node first checks whether the value of the checksum field is correct, then sets the value of the checksum field to zero, and finally performs authentication.

Refer to Table 5. Table 5 is a format of still another TLV field of the Hello packet according to an embodiment of this application. As shown in Table 5, meanings and lengths of fields in the TLV field are as follows.

Type: Used for a type of the TLV field, with a value TBD. A length of the type field is 1 byte.

Length: Length of the TLV field. The length of the TLV field is 9 bytes. A length of the length field may be 1 byte.

Adjacency state (adjacency state): A value of this field is 0, and the adjacency state is down, indicating that there is no neighboring relationship between neighboring nodes. The value of this field is 1, and the adjacency state is initialization, indicating that only one node has learned one or more of an SLNA of the neighboring node, a layer 2 identifier of the interface, and the like. The value of this field is 2, and the adjacency state is up, indicating that the neighboring nodes have learned one or more of an SLNA of each other, the layer 2 identifier of the interface, and the like. A length of this field is 1 byte.

Neighbor identifier (neighbor ID): System identifier of the neighboring node. A length of this field is 6 bytes.

Neighbor interface identifier (neighbor interface ID): Identifier of an interface of a neighboring node. A length of this field is 1 byte.

Link quality level (link quality level, LQL): Link quality level in a sending direction from a neighboring node to a node that sends the Hello packet, and the link quality level indicates link quality in the sending direction from the neighboring node to the node. Generally, the link quality level is obtained by the node through calculation based on one or more of a bit error, a delay, a signal-to-noise ratio, a transmit/receive rate, and the like. A value of the link quality level field is 0, indicating that the node does not start link detection. The value of the link quality level field is 1, indicating that the link quality level is high (high). The value of the link quality level field is 2, indicating that the link quality level is medium. The value of the link quality level field is 3, indicating that the link quality level is low (low). A value ranging from 5 to 254 of the link quality level field is reserved. The value of the link quality level field is 255, indicating that the neighboring node does not perform transmission on a link between the node and the neighboring node, or which may be understood as indicating that the neighboring node sets a maximum metric (max metric) - 1 on a link between the node and the neighboring node, so that the neighboring node does not forward traffic to the node. The maximum metric is 65535. In this way, the node that receives the Hello packet may learn the link quality level, and may further select a link with high link quality to transmit data. Therefore, reliability of data transmission is improved.

**Table 5**

| | |
|---|---|
| Type | Used for a type of this TLV field, with a value TBD. A length of the type field is 1 byte. |
| Length | Length of the TLV field. The length of the TLV field is 9 bytes. A length of the length field may be 1 byte. |
| Adjacency state (adjacency state) | the value 0 of this field is, the adjacency state is down, indicating that there is no neighboring relationship between neighboring nodes. The value of this field is 1, and the adjacency state is initialization, indicating that only one node has learned one or more of an SLNA of the neighboring node, a layer 2 identifier of the interface, and the like. The value of this field is 2, and the adjacency state is up, indicating that the neighboring nodes have learned one or more of an SLNA of each other, the layer 2 identifier of the interface, and the like. A length of this field is 1 byte. |
| Neighbor identifier (neighbor ID) | System identifier of a neighboring node. A length of this field is 6 bytes. |
| Neighbor interface identifier (neighbor interface ID) | Identifier of an interface of the neighboring node. A length of this field is 1 byte. |
| Link quality level (link quality level, LQL) | Link quality level in the sending direction from the neighboring node to the node that sends the Hello packet, where the link quality level indicates link quality in the sending direction from the neighboring node to the node. Generally, the link quality level is obtained by the node through calculation based on one or more of a bit error, a delay, a signal-to-noise ratio, a transmit/receive rate, and the like. A value of the link quality level field is 0, indicating that the node does not start link detection. The value of the link quality level field is 1, indicating that the link quality level is high (high). The value of the link quality level field is 2, indicating that the link quality level is medium. The value of the link quality level field is 3, indicating that the link quality level is low (low). A value ranging from 5 to 254 of the link quality level field is reserved. The value of the link quality level field is 255, indicating that the neighboring node does not perform transmission on a link between the node and the neighboring node, or which may be understood as indicating that the neighboring node sets a maximum metric (max metric) - 1 on a link between the node and the neighboring node, so that the neighboring node does not forward traffic to the node. The maximum metric is 65535. |

In this application, the TLV field shown in Table 5 may be referred to as an adjacency state TLV field, or may use another name. This is not limited herein.

It should be understood that the Hello packet may include one adjacency state TLV field. If the Hello packet received by the node includes a plurality of adjacency state TLV fields, the Hello packet is discarded.

Refer to Table 6. Table 6 is a format of yet still another TLV field of the Hello packet according to an embodiment of this application. As shown in Table 6, meanings and lengths of fields in the TLV field are as follows.

Type: Used for a type of the TLV field, with a value TBD. A length of the type field is 1 byte.

Length: Length of the TLV field. The length of the TLV field may be 0 to 255 bytes. A length of the length field may be 1 byte.

L2ID: L2ID of the interface on which the node that sends the Hello packet. A length of this field may be 6 bytes. In this way, the node that receives the Hello packet may learn the L2ID of the interface on which the node that sends the Hello packet.

SLNA: Can be understood as the SLNA of the interface on which the node that sends the Hello packet. The length of this field may be 2 bytes. In this way, the node that receives the Hello packet may learn the SLNA of the interface on which the node that sends the Hello packet.

**Table 6**

| | |
|---|---|
| Type | Used for a type of this TLV field, with a value TBD. A length of the type field is 1 byte. |
| Length | Length of the TLV field, where the length of the TLV field may be 0 to 255 bytes. A length of the length field may be 1 byte. |
| L2ID | L2ID of the interface on which the node that sends the Hello packet. A length of this field may be 6 bytes. |
| SLNA | Can be understood as the SLNA of the interface on which the node that sends the Hello packet. The length of this field may be 2 bytes. |

In this application, the TLV field shown in Table 6 may be referred to as an SLNA TLV field, or may use another name. This is not limited herein.

It should be understood that the Hello packet may include one or more SLNA TLV fields. Optionally, one or more SLNAs may be configured for the interface on which the node sends the Hello packet. In a possible implementation, the Hello packet may include one SLNA TLV field, and one SLNA TLV field may include one or more SLNAs. In another possible implementation, the Hello packet may include a plurality of SLNA TLV fields, and one SLNA TLV field may include one SLNA. It should be noted that, when the Hello packet from the neighboring node includes a plurality of SLNAs of the neighboring node, the node may use a union set of the plurality of SLNAs as an SLNA for performing communication at a network layer with the neighboring node.

In addition, after obtaining the SLNA, a node needs to carry the SLNA TLV field in the Hello packet.

The foregoing content briefly describes meanings of some terms in embodiments of this application. To better understand the technical solutions provided in the embodiments of this application, the foregoing content does not constitute a limitation on the technical solutions provided in embodiments of this application.

It should be understood that the technical solutions in embodiments of this application may be applied to a long term evolution (long term evolution, LTE), a fifth generation mobile communication technology (5th generation mobile networks, 5G), a wireless local area network (wireless local area network, WLAN) system, and the like. The technical solutions in embodiments of this application may be further applied to another future communication system, for example, a 6G communication system. In the future communication system, a same function may be maintained, but a name may be changed. In addition, the technical solutions in embodiments of this application may be further applied to an internet of vehicles, for example, a vehicle-to-everything V2X, a long term evolution-vehicle LTE-V, or a vehicle-to-vehicle V2V.

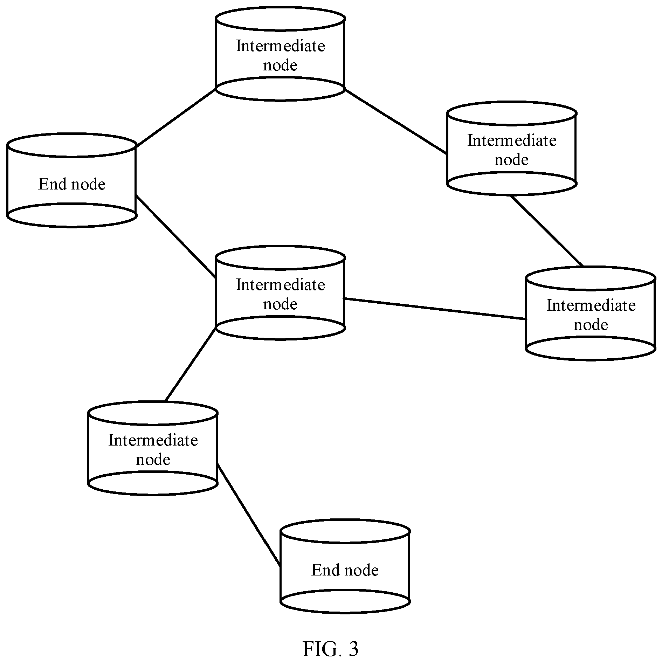

FIG. 3 is a diagram of a system architecture according to an embodiment of this application. One or more end nodes and one or more intermediate nodes may be included. One end node may be connected to one or more intermediate nodes, and one intermediate node may also be connected to one or more intermediate nodes to form a corresponding link. Certainly, data transmission may be further performed between these nodes by using corresponding links. It should be understood that FIG. 3 is merely a diagram, and does not constitute a limitation on an application scenario of the technical solutions provided in this application.

Optionally, the architecture shown in FIG. 3 may be applicable to one or more scenarios, such as a mobile internet (mobile internet, MI), industrial control (industrial control), self driving (self driving), transportation safety (transportation safety), an internet of things (internet of things, IoT), a smart city (smart city), a smart home (smart home), and a vehicle-mounted communication. For example, in a vehicle-mounted communication scenario, the intermediate node may be, for example, a gateway (gateway, GW), or a telematics box (telematics box, Tbox, or referred to as a TCU). The GW is a core component in an electronic and electrical architecture of the vehicle. As a data interaction hub of a vehicle network, the GW may route network data of a controller area network (controller area network, CAN), a local interconnect network (local interconnect network, LIN), media oriented system transport (media oriented system transport, MOST), and FlexRay in different networks. The Tbox is mainly configured to communicate with an external vehicle, a background system, and a mobile application (application, APP). The end node may be, for example, a mobile data center (mobile data center, MDC), a human-machine interaction (human-machine interaction, HMI), or an electronic control unit (electronic control unit, ECU). The MDC is an intelligent vehicle-mounted computing platform for the automobile. The HMI is an infotainment system for the automobile. The ECU is a special microcomputer controller for the automobile.

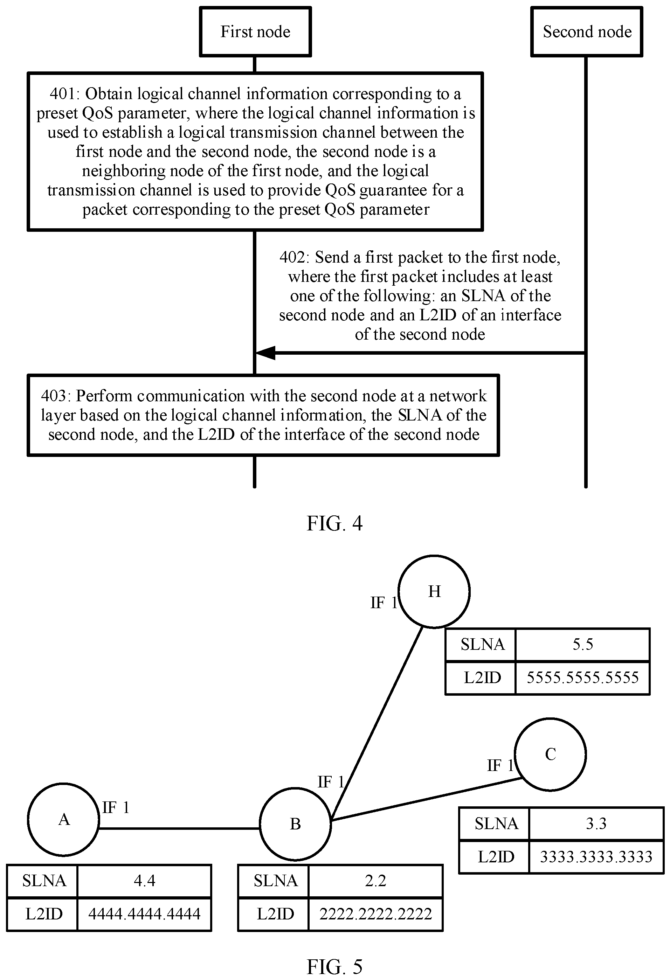

FIG. 4 is a schematic flowchart of a communication method according to an embodiment of this application. In FIG. 4, a first node may be an end node, and a second node may be an intermediate node. Alternatively, the first node may be an intermediate node, and the second node may be an end node. Alternatively, both the first node and the second node may be intermediate nodes. As shown in FIG. 4, the method includes but is not limited to the following steps.

401: A first node obtains logical channel information corresponding to a preset QoS parameter. The logical channel information is used to establish a logical transmission channel between the first node and a second node, the second node is a neighboring node of the first node, and the logical transmission channel is used to provide QoS guarantee for a packet corresponding to the preset QoS parameter.

For the preset QoS parameter and the neighboring node, refer to the foregoing related description. Details are not described herein again. It should be understood that in this application, different logical channel information may be used to establish different logical transmission channels, so as to transmit different services. That is, for different service requirements, the first node may establish different logical transmission channels by using different logical channel information, to transmit different services. Therefore, the preset QoS parameter corresponds to the logical channel information.

Optionally, the logical channel information may include at least one of the following: a TCID and an LCID.

402: The second node sends a first packet to the first node, where the first packet includes at least one of the following: an SLNA of the second node and an L2ID of an interface of the second node.

Correspondingly, the first node receives the first packet sent by the second node.

The first packet may be, for example, a Hello packet. For the Hello packet, refer to the foregoing related description. Details are not described herein again.

Optionally, the first packet may include a first TLV field, and the first TLV field includes at least one of the following: the SLNA of the second node and the L2ID of the interface of the second node. There may be one or more SLNAs of the second node. In a possible implementation, one or more SLNAs of the second node correspond to an L2ID of one interface of the second node.

It should be noted that the first TLV field may be the SLNA TLV field in Table 6. For details, refer to the foregoing related description. Details are not described herein again.

It can be learned that the first TLV field includes at least one of the following: the SLNA of the second node and the L2ID of the interface of the second node, so that the first node may perform communication at the network layer with the second node based on the logical channel information, the SLNA of the second node, and the L2ID of the interface of the second node.

Optionally, the first packet further includes a link quality level in a sending direction from the first node to the second node, and the link quality level indicates link quality in the sending direction from the first node to the second node. For link quality levels, refer to related descriptions in Table 5. Details are not described herein again. It should be understood that the link quality level is obtained by the second node through calculation based on one or more of a bit error, a delay, a signal-to-noise ratio, a transmit/receive rate, and the like.

In a possible implementation, the first packet may further include a second TLV field, and the second TLV field includes a link quality level. It should be noted that the second TLV field may be the adjacency state TLV field in Table 5. For details, refer to the foregoing related description. Details are not described herein again.

It can be learned that the first packet further includes the link quality level in the sending direction from the first node to the second node, so that the first node can learn of the link quality level, and further can select a link with high link quality to transmit data. This improves reliability of data transmission.

Optionally, the second node is an intermediate node, and the first packet further includes an area address of the second node. The area address of the second node indicates that an area in which the second node is located is a level-1 area and/or a level-2 area. There may be one or more area addresses of the second node. This is not limited herein. In addition, for the level-1 area and the level-2 area, refer to the foregoing related description. Details are not described herein again.

In a possible implementation, the area address of the second node belongs to an address range of the level-1 area, and the area address of the second node indicates that the area in which the second node is located is the level-1 area. For example, the area address of the second node is 2, and the address range of the level-1 area is 1 to 30000. Therefore, 2 belongs to the address range of the level-1 area, and it may be learned that the area in which the second node is located is the level-1 area.

In another possible implementation, the area address of the second node belongs to an address range of the level-2 area, and the area address of the second node indicates that the area in which the second node is located is the level-2 area. For example, the area address of the second node is 32561, and the address range of the level-2 area is 30001 to 60000. Therefore, the 32561 belongs to the address range of the level-2 area, and it may be learned that the area in which the second node is located is the level-2 area.

In still another possible implementation, the area address of the second node belongs to the address range of the level-1 area and a level-2 area, and the area address of the second node indicates that the area in which the second node is located is an overlapping area of the level-1 area and the level-2 area. For example, area addresses of the second node are 2 and 32561, respectively. The address range of the level-1 area is 1 to 30000, the address range of the level-2 area is 30001 to 60000, 2 belongs to the address range of the level-1 area, and 32561 belongs to the address range of the level-2 area. Therefore, the second node is in both the first area and the second area, that is, the area in which the second node is located is an overlapping area of the level-1 area and the level-2 area.

It should be noted that, in this application, the end node has no area address. Therefore, when the second node is the end node, the first packet does not include the area address of the second node. In this application, the area in which the end node is located is the level-1 area. It should be understood that the end node may be connected to the intermediate node, and an area in which the intermediate node is located is the level-1 area, or an area in which the intermediate node is located is the overlapping area of the level-1 area and the level-2 area.

For example, with reference to FIG. 2, it can be learned that one end node may be connected to an intermediate node whose area address is 1, and another end node may be connected to an intermediate node whose area addresses are 2 and 30002, respectively. The area in which the intermediate node whose area address is 1 is located is the level-1 area. The area in which the intermediate node whose area addresses are 2 and 30002 is located is the overlapping area between the level-1 area and the level-2 area. In addition, in FIG. 2, the area in which an intermediate node whose area address is 30002 is located is the level-2 area.

Optionally, the first packet further includes a third TLV field, the third TLV field includes one length field and at least one area address field corresponding to the length field, and the length field indicates a total length of the at least one area address field, and one area address field indicates one area address of the second node. The third TLV field may be the area address TLV field in Table 3. For details, refer to the foregoing related description. Details are not described herein again.

For example, two area addresses are configured for the second node, which are 1 and 30001, respectively. The third TLV field includes one length field and two area address fields corresponding to the length field. A length of an area address field is 2 bytes. Therefore, a total length of the two area address fields is 4 bytes, that is, a length of the length field is 4 bytes. In addition, area addresses indicated by the two area address fields are 1 and 30001, respectively.

It can be learned that the area address of the second node may indicate that the area in which the second node is located is the level-1 area and/or the level-2 area. This avoids a case in which a plurality of pieces of information are required to jointly indicate that the area in which the second node is located is the level-1 area and/or the level-2 area, and reduces overheads. In addition, the third TLV field includes one length field and at least one area address field corresponding to the length field, and the length field indicates a total length of the at least one area address field. This avoids a need to configure a plurality of length fields to respectively indicate lengths of corresponding area address fields, and reduces overheads.

Optionally, the first packet further includes a fourth TLV field, and the fourth TLV field indicates an authentication algorithm used by the second node, or the fourth TLV field indicates an authentication algorithm and an authentication key that are used by the second node. The fourth TLV field may be the authentication TLV field in Table 4. For details, refer to the foregoing related description. Details are not described herein again. In addition, for the authentication algorithm and the authentication key, refer to the foregoing related description. Details are not described herein again.

It can be learned that the first packet includes a fourth TLV field, and the fourth TLV field indicates the authentication algorithm used by the second node, or the fourth TLV field indicates the authentication algorithm and the authentication key that are used by the second node. This avoids needing different authentication TLV fields to respectively indicate a non-keychain class and a keychain class, and reduces overheads.

Optionally, the first packet may further indicate a type of the second node. It should be understood that the type of the second node may be an end node or an intermediate node.

In a possible implementation, the first packet may include a PDU type field, and the PDU type field may indicate the type of the second node. For the PDU type field, refer to related descriptions in FIG. 3. Details are not described herein again.

It can be learned that because the first packet may further indicate the type of the second node, the first node may learn of the type of the second node, so that the end node may discard the Hello packet sent by the end node.

After step 402, the method may further include step 403.

403: The first node performs communication at a network layer with the second node based on the logical channel information, the SLNA of the second node, and the L2ID of the interface of the second node.

For the network layer, refer to related descriptions in Table 6. Details are not described again.

Optionally, step 403 may include: The first node establishes a forwarding table based on the logical channel information, the SLNA of the second node, and the L2ID of the interface of the second node. The forwarding table is used for direct transmission between the first node and the neighboring node.

It should be understood that the forwarding table may include at least one of the following: the logical channel information, the SLNA of the second node, and the L2ID of the interface of the second node. There is a one-to-one correspondence between the logical channel information, the SLNA of the second node, and the L2ID of the interface of the second node. Certainly, it may also be understood that the forwarding table includes the one-to-one correspondence between the logical channel information, the SLNA of the second node, and the L2ID of the interface of the second node.

In a possible implementation, the forwarding table may further include at least one of the following: the link quality level and the interface identifier of the first node. The logical channel information, the SLNA of the second node, the L2ID of the interface of the second node, the link quality level, and the interface identifier of the first node are in the one-to-one correspondence. Certainly, it may also be understood that the forwarding table includes the one-to-one correspondence between the logical channel information, the SLNA of the second node, the L2ID of the interface of the second node, the link quality level, and the interface identifier of the first node.

For example, FIG. 5 is a diagram of building a forwarding table according to an embodiment of this application. In FIG. 5, a node A is an end node, an SLNA of the node A is 4.4, an L2ID of an interface of the node A is 4444.4444.4444, and an interface identifier of the node A is IF 1. A node B is an intermediate node, an SLNA of the node B is 2.2, an L2ID of the interface of the node B is 2222.2222.2222, and an interface identifier of the node B is IF 1. A node C is an intermediate node, an SLNA of the node C is 3.3, an L2ID of the interface of the node C is 3333.3333.3333, and an interface identifier of the node C is IF 1. Anode H is an intermediate node, an SLNA of the node H is 5.5, an L2ID of the interface of the node H is 5555.5555.5555, and an interface identifier of the node H is IF 1. For example, the node B may separately receive Hello packets from the node A, the node C, and the node H. Therefore, the node B may obtain a forwarding table. The forwarding table may include the interface identifier of the node B, an SLNA of a neighboring node, an L2ID of an interface of the neighboring node, logical channel information of the node B, and an LQL in a sending direction from the node B to the neighboring node. The interface identifier of the node B, the SLNA of the neighboring node, the L2ID of the interface of the neighboring node, the logical channel information of the node B, and the LQL are in a one-to-one correspondence. For details, refer to Table 7. With reference to FIG. 5, it can be learned that the SLNA of the neighboring node in Table 7 includes the SLNA of the node A, the SLNA of the node C, and the SLNA of the node H. The L2ID of the interface of the neighboring node includes the L2ID of the interface of the node A, the L2ID of the interface of the node C, and the L2ID of the interface of the node H. Secondly, the logical channel information of the node B includes TCIDs and LCIDs, where the TCIDs are respectively 3030, 4020, and 5001, and the LCIDs are respectively 10, 12, and 13. This means that the node B establishes different logical transmission channels with the node A, the node C, and the node H. In addition, LQLs in sending directions from the node B to the node A, the node C, and the node H are also different. It should be understood that Table 7 is merely an example, and may alternatively have another form. This is not limited herein.

**Table 7**

| Interface identifier of the node B | SLNA of the neighboring node | L2ID of the interface of the neighboring node | Logical channel information of the node B | | LQL in the sending direction from the node B to the neighboring node |
|---|---|---|---|---|---|
| | | | TCID | LCID | |
| IF 1 | 3.3 | 3333.3333.3333 | 3030 | 10 | 1 |
| IF 1 | 4.4 | 4444.4444.4444 | 4020 | 12 | 2 |
| IF 1 | 5.5 | 5555.5555.5555 | 5001 | 13 | 1 |

It can be learned that the first node may obtain logical channel information corresponding to the preset QoS parameter, where the logical channel information is used to establish a logical transmission channel between the first node and a neighboring node of the first node, so that the first node may receive a first packet sent by the neighboring node, and may perform communication at the network layer with the neighboring node based on the logical channel information, an SLNA of the neighboring node, and an L2ID of an interface of the neighboring node. Because the logical transmission channel may be used to provide QoS guarantee for the packet corresponding to the preset QoS parameter, the first node may provide QoS guarantee for the packet when performing communication at the network layer with the neighboring node, and may further resolve a reachability problem of packet forwarding, and improve reliability of data transmission.

Optionally, the first node is an end node, and the second node is an intermediate node. The method may further include: The first node adds default route information to a routing table of the first node. The default route information may include at least one of the following: a default destination address, an outbound interface of the first node, an L2ID of an interface of a next-hop node, and the logical channel information. That the default destination address, the outbound interface of the first node, the L2ID of the interface of the next-hop node, and the logical channel information are in a one-to-one correspondence may also be understood as: The default route information includes the one-to-one correspondence between the default destination address, the outbound interface of the first node, the L2ID of the interface of the next-hop node, and the logical channel information.

The default destination address may be, for example, 0.0. The outbound interface of the first node may be understood as an interface that is in the first node and that is connected to the second node. The next-hop node is the second node.

For example, for the routing table of the first node, refer to Table 8. In Table 8, the default destination address is 0.0, the outbound interface of the first node is an interface whose interface identifier is IF 1, and the L2ID of the interface of the next-hop node is 2222.2222.2222. The logical channel information includes the TCID and LCID. The TCID is 20 and the LCID is 2.

**Table 8**

| Default destination address | Outbound interface of the first node | L2ID of the interface of the next-hop node | Logical channel information of the first node | |
|---|---|---|---|---|
| | | | TCID | LCID |
| 0.0 | IF 1 | 2222.2222.2222 | 20 | 2 |

It should be understood that, when the first node forwards the packet, if no corresponding route is found in the routing table of the first node, the packet may be sent to the default destination address. For example, with reference to FIG. 5, the node A needs to send a packet to the node H. However, because the routing table of the node A does not include a route of the node H, for example, the SLNA of the node H or the L2ID of the interface of the node H, the node A may obtain the default routing information. If the L2ID of the interface of the next-hop node in the default routing information is the L2ID of the interface of the node B, the node A may send, to the node B, the packet sent to the node H.

It can be learned that, because the first node adds the default route information to the routing table of the first node, when forwarding a packet, if no corresponding route is found in the routing table of the first node, the first node may send the packet to the default destination address, so that the first node can maintain fewer routes. In this way, memory is saved, more energy is saved, and the first node is more conducive to moving between different intermediate nodes. In addition, a problem of packet loss is avoided, and reliability of data transmission is improved.

The methods in embodiments of this application are described in detail above. Apparatuses in embodiments of this application are provided below.

An embodiment of this application further provides an apparatus configured to implement any one of the foregoing methods. For example, a communication apparatus is provided, including units (or means) configured to implement steps performed by the first node in any one of the foregoing methods.

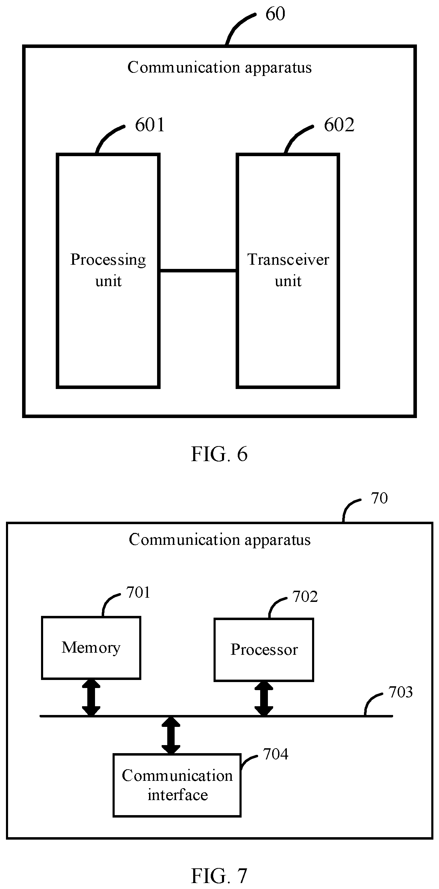

For example, FIG. 6 is a diagram of a structure of a communication apparatus 60 according to an embodiment of this application. The communication apparatus 60 includes a processing unit 601 and a transceiver unit 602, for example, implementing the communication method in any embodiment shown in FIG. 4.

It should be understood that division of the units in the foregoing apparatus is merely logical function division. During actual implementation, all or some of the units may be integrated into one physical entity, or may be physically separated. In addition, the units in the apparatus may be implemented in a form of software invoked by a processor. For example, the apparatus includes a processor. The processor is connected to a memory. The memory stores instructions. The processor invokes the instructions stored in the memory, to implement any one of the foregoing methods or implement functions of each unit of the apparatus. The processor is, for example, a general-purpose processor, for example, a central processing unit (Central Processing Unit, CPU) or a microprocessor. The memory is a memory inside the apparatus or a memory outside the apparatus. Alternatively, the units in the apparatus may be implemented in a form of hardware circuits, and functions of some or all units may be implemented by designing the hardware circuits. The hardware circuits may be understood as one or more processors. For example, in an implementation, the hardware circuit is an application-specific integrated circuit (application-specific integrated circuit, ASIC), and the functions of some or all of the foregoing units are implemented by designing a logical relationship between elements in the circuit. For another example, in another implementation, the hardware circuit may be implemented by using a programmable logic device (programmable logic device, PLD). A field programmable gate array (Field Programmable Gate Array, FPGA) is used as an example, and the field programmable gate array may include a large quantity of logic gate circuits. A configuration file is used to configure a connection relationship between logic gate circuits, so as to implement functions of some or all of the foregoing units. All units of the foregoing apparatuses may be implemented in a form of software invoked by the processor, or all units may be implemented in a form of the hardware circuit, or some units may be implemented in a form of software invoked by the processor, and a remaining part may be implemented in a form of the hardware circuit.

In this embodiment of this application, the processor is a circuit that has a signal processing capability. In an implementation, the processor may be a circuit that has an instruction reading and running capability, for example, a central processing unit (Central Processing Unit, CPU), a microprocessor, a graphics processing unit (graphics processing unit, GPU) (which may be understood as a microprocessor), or a digital signal processor (digital signal processor, DSP). In another implementation, the processor may implement a specific function by using a logical relationship of the hardware circuit. The logical relationship of the hardware circuit is fixed or reconfigurable. For example, the processor is an application-specific integrated circuit (application-specific integrated circuit, ASIC) or a hardware circuit, for example, the FPGA, implemented by a programmable logic device (programmable logic device, PLD). In the reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as the ASIC, for example, a neural network processing unit (Neural Network Processing Unit, NPU), a tensor processing unit (Tensor Processing Unit, TPU), or a deep learning processing unit (Deep learning Processing Unit, DPU).

It can be learned that each unit in the foregoing apparatus may be one or more processors (or processing circuits) configured to implement the foregoing method, for example, a CPU, a GPU, an NPU, a TPU, a DPU, a microprocessor, a DSP, an ASIC, an FPGA, or a combination of at least two of these processor forms.

In addition, all or some of the units of the apparatus may be integrated, or may be implemented independently. In an implementation, the units may be integrated together and implemented in a form of a system-on-a-chip (system-on-a-chip, SOC). The SOC may include at least one processor, configured to implement any one of the methods or implement functions of the units of the apparatus. Types of the at least one processor may be different, for example, the at least one processor includes a CPU and an FPGA, a CPU and an artificial intelligence processor, or a CPU and a GPU.

Whether these functional modules are subdivided or combined, a general process performed by the apparatus 60 in a communication process is the same. For example, the transceiver unit 602 in the foregoing apparatus 60 may also be referred to as a communication unit. Usually, each unit corresponds to respective program code (or program instructions). When the program code corresponding to the unit is run on a processor, the unit executes a corresponding process to implement a corresponding function. It should be noted that for implementation of the following units, reference may be made to corresponding descriptions in the embodiment shown in FIG. 4.

In a possible implementation, the communication apparatus 60 may be the first node in the embodiment shown in FIG. 4, or a module in the first node, for example, a chip or an integrated circuit. The communication apparatus includes a processing unit 601 and a transceiver unit 602. The units are described as follows.

The transceiver unit 602 is configured to: obtain logical channel information corresponding to a preset quality of service QoS parameter, where the logical channel information is used to establish a logical transmission channel between the first node and a second node, the second node is a neighboring node of the first node, and the logical transmission channel is used to provide QoS guarantee for a packet corresponding to the preset QoS parameter; and receive a first packet sent by the second node, where the first packet includes at least one of the following: a spark link network address SLNA of the second node, and a layer 2 identifier L2ID of an interface of the second node; and perform communication at a network layer with the second node based on the logical channel information, the SLNA of the second node, and the L2ID of the interface of the second node.

Optionally, the logical channel information includes at least one of the following: a transport channel identifier TCID and a logical channel identifier LCID.

Optionally, that the transceiver unit 602 is configured to perform communication at the network layer with the second node based on the logical channel information, the SLNA of the second node, and the L2ID of the interface of the second node includes: The transceiver unit 602 is configured to establish a forwarding table based on the logical channel information, the SLNA of the second node, and the L2ID of the interface of the second node, where the forwarding table includes at least one of the following: the logical channel information, the SLNA of the second node, and the L2ID of the interface of the second node, and the logical channel information, the SLNA of the second node, and the L2ID of the interface of the second node are in a one-to-one correspondence.

Optionally, the forwarding table further includes a link quality level in a sending direction from the first node to the second node, and the link quality level indicates link quality in the sending direction from the first node to the second node.

Optionally, the link quality level is included in the first packet.

Optionally, the first packet further includes an area address of the second node, the second node is an intermediate node, and the area address of the second node indicates that an area in which the second node is located is a level-1 area and/or a level-2 area, where the level-2 area is used to connect the level-1 area.

Optionally, the level-1 area is a non-backbone area, and the level-2 area is a backbone area.

Optionally, the area address of the second node belongs to an address range of the level-1 area, and the area address of the second node indicates that the area in which the second node is located is the level-1 area; the area address of the second node belongs to an address range of the level-2 area, and the area address of the second node indicates that the area in which the second node is located is the level-2 area; or the area address of the second node belongs to an address range of the level-1 area and the level-2 area, and the area address of the second node indicates that the area in which the second node is located is an overlapping area of the level-1 area and the level-2 area.

Optionally, the first packet further indicates a type of the second node.

Optionally, the first packet includes a first type length value TLV field, and the first TLV field includes at least one of the following: the SLNA of the second node and the L2ID of the interface of the second node.

Optionally, one or more SLNAs of the second node correspond to an L2ID of one interface of the second node.

Optionally, the first packet further includes a second TLV field, and the second TLV field includes the link quality level.

Optionally, the first packet further includes a third TLV field, the third TLV field includes one length field and at least one area address field corresponding to the length field, and the length field indicates a total length of the at least one area address field, and one area address field indicates one area address of the second node.

Optionally, the first packet further includes a fourth TLV field, and the fourth TLV field indicates an authentication algorithm used by the second node, or the fourth TLV field indicates an authentication algorithm and an authentication key that are used by the second node.

Optionally, the first node is an end node, and the second node is an intermediate node, and the communication apparatus 60 further includes a processing unit 601. The processing unit 601 is configured to add default route information to a routing table of the first node, where the default route information includes at least one of the following: a default destination address, an outbound interface of the first node, an L2ID of an interface of the next-hop node, and the logical channel information, where the next-hop node is the second node.

FIG. 7 is a diagram of a structure of a communication apparatus 70 according to an embodiment of this application. The apparatus 70 may include at least one memory 701 and at least one processor 702. Optionally, a bus 703 may be further included. Further, optionally, the apparatus may further include a communication interface 704, where the memory 701, the processor 702, and the communication interface 704 are connected by using the bus 703.

The memory 701 is configured to provide storage space, and the storage space may store data, for example, an operating system and a computer program. The memory 701 may be one or a combination of a random access memory (random access memory, RAM), a read-only memory (read-only memory, ROM), an erasable programmable read only memory (erasable programmable read only memory, EPROM), a compact disc read-only memory (compact disc read-only memory, CD-ROM), and the like.

The processor 702 is a module that performs an arithmetic operation and/or a logic operation, and may be specifically one or a combination of processing modules such as a central processing unit (central processing unit, CPU), a graphics processing unit (graphics processing unit, GPU), a microprocessor unit (microprocessor unit, MPU), an application-specific integrated circuit (Application-Specific Integrated Circuit, ASIC), a field programmable gate array (Field Programmable Gate Array, FPGA), and a complex programmable logic device (Complex programmable logic device, CPLD).

The communication interface 704 is configured to receive data sent by an external device and/or send data to an external device, and may be a wired link interface, for example, an Ethernet cable, or may be a wireless (for example, Wi-Fi, Bluetooth, or general wireless transmission) link interface. Optionally, the communication interface 704 may further include a transmitter (for example, a radio frequency transmitter, and an antenna), a receiver, or the like that is coupled to the interface.

The processor 702 in the apparatus 70 is configured to read the computer program stored in the memory 701, and is configured to perform the foregoing communication method, for example, the communication method described in any embodiment in FIG. 4.

In some possible implementations, the communication apparatus 70 may be the first node in the embodiment shown in FIG. 4, or a module in the first node, for example, a chip or an integrated circuit. The processor 702 in the apparatus 70 is configured to read the computer program stored in the memory 701, to perform the following operations:
obtaining logical channel information corresponding to a preset quality of service QoS parameter, where the logical channel information is used to establish a logical transmission channel between the first node and a second node, the second node is a neighboring node of the first node, and the logical transmission channel is used to provide QoS guarantee for the packet corresponding to the preset QoS parameter; receiving a first packet sent by the second node, where the first packet includes at least one of the following: a spark link network address SLNA of the second node, and a layer 2 identifier L2ID of an interface of the second node; and performing communication at a network layer with the second node based on the logical channel information, the SLNA of the second node, and the L2ID of the interface of the second node.

Optionally, the logical channel information includes at least one of the following: a transport channel identifier TCID and a logical channel identifier LCID.

Optionally, the processor 1202 is specifically configured to perform the following operation: establishing a forwarding table based on the logical channel information, the SLNA of the second node, and the L2ID of the interface of the second node, where the forwarding table includes at least one of the following: the logical channel information, the SLNA of the second node, and the L2ID of the interface of the second node. The logical channel information, the SLNA of the second node, and the L2ID of the interface of the second node are in a one-to-one correspondence.

Optionally, the forwarding table further includes a link quality level in a sending direction from the first node to the second node, and the link quality level indicates link quality in the sending direction from the first node to the second node.

Optionally, the link quality level is included in the first packet.

Optionally, the first packet further includes an area address of the second node, the second node is an intermediate node, and the area address of the second node indicates that an area in which the second node is located is a level-1 area and/or a level-2 area, where the level-2 area is used to connect the level-1 area.

Optionally, the level-1 area is a non-backbone area, and the level-2 area is a backbone area.

Optionally, the area address of the second node belongs to an address range of the level-1 area, and the area address of the second node indicates that the area in which the second node is located is the level-1 area; the area address of the second node belongs to an address range of the level-2 area, and the area address of the second node indicates that the area in which the second node is located is the level-2 area; or the area address of the second node belongs to an address range of the level-1 area and the level-2 area, and the area address of the second node indicates that the area in which the second node is located is an overlapping area of the level-1 area and the level-2 area.

Optionally, the first packet further indicates a type of the second node.

Optionally, the first packet includes a first type length value TLV field, and the first TLV field includes at least one of the following: the SLNA of the second node and the L2ID of the interface of the second node.

Optionally, one or more SLNAs of the second node correspond to an L2ID of one interface of the second node.

Optionally, the first packet further includes a second TLV field, and the second TLV field includes the link quality level.

Optionally, the first packet further includes a third TLV field, the third TLV field includes one length field and at least one area address field corresponding to the length field, and the length field indicates a total length of the at least one area address field, and one area address field indicates one area address of the second node.

Optionally, the first packet further includes a fourth TLV field, and the fourth TLV field indicates an authentication algorithm used by the second node, or the fourth TLV field indicates an authentication algorithm and an authentication key that are used by the second node.

Optionally, the first node is an end node, and the second node is an intermediate node. The processor 1202 is further configured to perform the following operation: adding default route information to a routing table of the first node, where the default route information includes at least one of the following: a default destination address, an outbound interface of the first node, an L2ID of an interface of a next-hop node, and the logical channel information, where the next-hop node is the second node.

An embodiment of this application provides a computer storage medium. The computer storage medium stores a computer program. When the computer program is run on a computer, the computer is enabled to perform the method in any one of FIG. 4.

An embodiment of this application provides a chip. The chip includes a processor and a communication interface. The processor is configured to invoke instructions from the communication interface and run the instructions. When executing the instructions, the processor implements the method according to any implementation of FIG. 4.

An embodiment of this application provides a computer program product. The computer program product includes a computer program. When the computer program is run on a computer, the computer is enabled to perform the method according to any implementation of FIG. 4.

When the computer instructions are loaded and executed on the computer, all or some of the process or functions according to embodiments of this application can be implemented. The computer may be a general-purpose computer, a dedicated computer, a computer network, or another programmable apparatus. The computer instructions may be stored in a computer-readable storage medium, or may be transmitted by using a computer-readable storage medium. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

Sequence adjustment, combination, or deletion may be performed on the steps in the method embodiments of this application based on an actual requirement.

Modules in the apparatus embodiments of this application may be combined, divided, or deleted based on an actual requirement.

## Claims

1. A communication method, comprising:
obtaining, by a first node, logical channel information corresponding to a preset quality of service QoS parameter, wherein the logical channel information is used to establish a logical transmission channel between the first node and a second node, the second node is a neighboring node of the first node, and the logical transmission channel is used to provide QoS guarantee for a packet corresponding to the preset QoS parameter;
receiving, by the first node, a first packet sent by the second node, wherein the first packet comprises at least one of the following: a spark link network address SLNA of the second node, and a layer 2 identifier L2ID of an interface of the second node; and
performing, by the first node, communication at a network layer with the second node based on the logical channel information, the SLNA of the second node, and the L2ID of the interface of the second node.

2. The method according to claim 1, wherein the logical channel information comprises at least one of the following: a transport channel identifier TCID and a logical channel identifier LCID.

3. The method according to claim 1 or 2, wherein the performing, by the first node, communication at a network layer with the second node based on the logical channel information, the SLNA of the second node, and the L2ID of the interface of the second node comprises:
establishing, by the first node, a forwarding table based on the logical channel information, the SLNA of the second node, and the L2ID of the interface of the second node, wherein
the forwarding table comprises at least one of the following: the logical channel information, the SLNA of the second node, and the L2ID of the interface of the second node, and the logical channel information, the SLNA of the second node, and the L2ID of the interface of the second node are in a one-to-one correspondence.

4. The method according to claim 3, wherein the forwarding table further comprises a link quality level in a sending direction from the first node to the second node, and the link quality level indicates link quality in the sending direction from the first node to the second node.

5. The method according to claim 4, wherein the link quality level is comprised in the first packet.

6. The method according to any one of claims 1 to 5, wherein the first packet further comprises an area address of the second node, the second node is an intermediate node, and the area address of the second node indicates that an area in which the second node is located is a level-1 area and/or a level-2 area, wherein
the level-2 area is used to connect the level-1 area.

7. The method according to claim 6, wherein the level-1 area is a non-backbone area, and the level-2 area is a backbone area.

8. The method according to claim 6 or 7, wherein
the area address of the second node belongs to an address range of the level-1 area, and the area address of the second node indicates that the area in which the second node is located is the level-1 area;
the area address of the second node belongs to an address range of the level-2 area, and the area address of the second node indicates that the area in which the second node is located is the level-2 area; or
the area address of the second node belongs to an address range of the level-1 area and the level-2 area, and the area address of the second node indicates that the area in which the second node is located is an overlapping area of the level-1 area and the level-2 area.

9. The method according to any one of claims 1 to 8, wherein the first packet further indicates a type of the second node.

10. The method according to any one of claims 1 to 9, wherein the first packet comprises a first type length value TLV field, and the first TLV field comprises at least one of the following: the SLNA of the second node and the L2ID of the interface of the second node.

11. The method according to claim 10, wherein one or more SLNAs of the second node correspond to an L2ID of one interface of the second node.

12. The method according to claim 5 or 10, wherein the first packet further comprises a second TLV field, and the second TLV field comprises the link quality level.

13. The method according to claim 6, 10, or 12, wherein the first packet further comprises a third TLV field, and the third TLV field comprises one length field and at least one area address field corresponding to the length field; and the length field indicates a total length of the at least one area address field, and one area address field indicates one area address of the second node.

14. The method according to claim 10, 12, or 13, wherein the first packet further comprises a fourth TLV field, and the fourth TLV field indicates an authentication algorithm used by the second node, or the fourth TLV field indicates an authentication algorithm and an authentication key that are used by the second node.

15. The method according to any one of claims 1 to 14, wherein the first node is an end node, the second node is the intermediate node, and the method further comprises:
adding, by the first node, default route information to a routing table of the first node, wherein the default route information comprises at least one of the following: a default destination address, an outbound interface of the first node, an L2ID of an interface of a next-hop node, and the logical channel information, wherein
the next-hop node is the second node.

16. A communication apparatus, wherein the communication apparatus is a first node, the communication apparatus comprises a transceiver unit, and the transceiver unit is configured to:
obtain logical channel information corresponding to a preset quality of service QoS parameter, wherein the logical channel information is used to establish a logical transmission channel between the first node and a second node, the second node is a neighboring node of the first node, and the logical transmission channel is used to provide QoS guarantee for a packet corresponding to the preset QoS parameter;
receive a first packet sent by the second node, wherein the first packet comprises at least one of the following: a spark link network address SLNA of the second node, and a layer 2 identifier L2ID of an interface of the second node; and
perform communication at a network layer with the second node based on the logical channel information, the SLNA of the second node, and the L2ID of the interface of the second node.

17. The apparatus according to claim 16, wherein the logical channel information comprises at least one of the following: a transport channel identifier TCID and a logical channel identifier LCID.

18. The apparatus according to claim 16 or 17, wherein that the transceiver unit is configured to perform communication at a network layer with the second node based on the logical channel information, the SLNA of the second node, and the L2ID of the interface of the second node comprises:
the transceiver unit is configured to establish a forwarding table based on the logical channel information, the SLNA of the second node, and the L2ID of the interface of the second node, wherein
the forwarding table comprises at least one of the following: the logical channel information, the SLNA of the second node, and the L2ID of the interface of the second node, and the logical channel information, the SLNA of the second node, and the L2ID of the interface of the second node are in a one-to-one correspondence.

19. The apparatus according to claim 18, wherein the forwarding table further comprises a link quality level in a sending direction from the first node to the second node, and the link quality level indicates link quality in the sending direction from the first node to the second node.

20. The apparatus according to claim 19, wherein the link quality level is comprised in the first packet.

21. The apparatus according to any one of claims 16 to 20, wherein the first packet further comprises an area address of the second node, the second node is an intermediate node, and the area address of the second node indicates that an area in which the second node is located is a level-1 area and/or a level-2 area, wherein
the level-2 area is used to connect the level-1 area.

22. The apparatus according to claim 21, wherein the level-1 area is a non-backbone area, and the level-2 area is a backbone area.

23. The apparatus according to claim 21 or 22, wherein
the area address of the second node belongs to an address range of the level-1 area, and the area address of the second node indicates that the area in which the second node is located is the level-1 area;
the area address of the second node belongs to an address range of the level-2 area, and the area address of the second node indicates that the area in which the second node is located is the level-2 area; or
the area address of the second node belongs to an address range of the level-1 area and the level-2 area, and the area address of the second node indicates that the area in which the second node is located is an overlapping area of the level-1 area and the level-2 area.

24. The apparatus according to any one of claims 16 to 23, wherein the first packet further indicates a type of the second node.

25. The apparatus according to claim 16, wherein the first packet comprises a first type length value TLV field, and the first TLV field comprises at least one of the following: the SLNA of the second node and the L2ID of the interface of the second node.

26. The apparatus according to claim 25, wherein one or more SLNAs of the second node correspond to an L2ID of one interface of the second node.

27. The apparatus according to claim 19 or 25, wherein the first packet further comprises a second TLV field, and the second TLV field comprises the link quality level.

28. The apparatus according to claim 21, 25, or 27, wherein the first packet further comprises a third TLV field, and the third TLV field comprises one length field and at least one area address field corresponding to the length field; and the length field indicates a total length of the at least one area address field, and one area address field indicates one area address of the second node.

29. The apparatus according to claim 25, 27, or 28, wherein the first packet further comprises a fourth TLV field, and the fourth TLV field indicates an authentication algorithm used by the second node, or the fourth TLV field indicates an authentication algorithm and an authentication key that are used by the second node.

30. The apparatus according to any one of claims 16 to 29, wherein the first node is an end node, the second node is the intermediate node, the communication apparatus further comprises a processing unit, and the processing unit is configured to add default route information to a routing table of the first node, wherein the default route information comprises at least one of the following: a default destination address, an outbound interface of the first node, an L2ID of an interface of a next-hop node, and the logical channel information, wherein
the next-hop node is the second node.

31. A communication apparatus, comprising a processor and a memory, wherein the memory is configured to store one or more programs, the one or more programs comprise computer-executable instructions, and when the apparatus is operating, the processor executes the one or more programs stored in the memory, to enable the apparatus to perform the method according to any one of claims 1 to 15.

32. A computer storage medium, wherein the computer storage medium stores a computer program, and when the computer program is run on a computer, the computer is enabled to perform the method according to any one of claims 1 to 15.

33. A chip, wherein the chip comprises a processor and a communication interface, the processor is configured to invoke instructions from the communication interface and run the instructions, and when the processor executes the instructions, the method according to any one of claims 1 to 15 is implemented.
